# EUROPEAN PATENT SPECIFICATION

(11) **EP 3 162 865 B1**
(45) Date of publication and mention of the grant of the patent: **25.03.2020**
(21) Application number: 15812051.9
(22) Date of filing: 14.05.2015
(51) Int. Cl.: C09J 7/24, C09J 123/26, C09J 201/02, B32B 7/10, B32B 7/12, B32B 27/06, B32B 27/08, B32B 27/16, B32B 27/20, B32B 27/28, B32B 27/32, H01M 4/62, H01M 10/052

(54) **THERMOPLASTIC ADHESIVE SHEET**
THERMOPLASTISCHE HAFTFOLIE
FEUILLE ADHÉSIVE THERMOPLASTIQUE

(30) Priority: 25.06.2014 JP 2014130516
(43) Date of publication of application: 03.05.2017
(73) Proprietor: NOK Corporation, Minato-ku Tokyo 105-8585 (JP)
(72) Inventor: ARAI Katsuyoshi, Fujisawa-shi Kanagawa 251-0042 (JP); SANO Shinichiro, Fujisawa-shi Kanagawa 251-0042 (JP); ABE Katsumi, Fujisawa-shi Kanagawa 251-0042 (JP)
(74) Representative: Weickmann & Weickmann PartmbB
(86) International application number: PCT/JP2015/063894
(87) International publication number: WO 2015/198737

(56) References cited:
- WO-A1-2013/162062
- JP-A- H06 136 330
- JP-A- H06 163 031
- JP-A- H08 190 902
- JP-A- S61 176 054
- JP-A- S62 154 469
- JP-A- S62 296 361
- JP-A- 2009 040 975
- JP-A- 2011 151 030

## Description

### TECHNICAL FIELD

The present invention relates to a thermoplastic adhesive sheet and more particularly to a thermoplastic adhesive sheet bonded to an imide group-containing resin compounded with a filler.

### BACKGROUND

Although a thermosetting resin or a thermoplastic resin is used for an interlayer adhesive seal material for a lithium ion secondary battery, the thermosetting resin has significant curing shrinkage leading to a problem of wrinkles and the thermoplastic resin is therefore desirably used.

For weight saving and an improvement in safety, consideration is being given to a bipolar lithium ion secondary battery in which an imide group-containing resin compounded with a filler is used for a current collecting foil (Patent Document 1) .

On the other hand, Patent Document 2 describes that when a battery component is made up by joining of a polyolefin resin molded body, a joint surface of the molded body is treated with a fluorine gas-containing gas to add a certain functional group before joining using a reactive hot melt adhesive.

Patent Document 3 discloses an adhesive sheet comprising a layer of maleic anhydride-modified polypropylene hot-melt adhesive film, which is laminated between two polyimide films.

### PRIOR ART DOCUMENTS

### PATENT DOCUMENTS

Patent Document 1: JP-A-2013-261192
Patent Document 2: JP-A-10-261387
Patent Document 3: WO-A-2013/162062

### SUMMARY OF THE INVENTION

### PROBLEM TO BE SOLVED BY THE INVENTION

When an imide group-containing resin compounded with a filler as described in Patent Document 1 is used as an adherend, a thermoplastic resin has problems of difficulty in bonding because of low adhesiveness to the adherend and of low electrolyte-resistance adhesiveness if bonded.

Therefore, a method of enhancing the adhesiveness is used by applying a denaturation treatment to the thermoplastic resin to introduce a functional group; however, this method requires an increased denaturation amount of the functional group for the enhancement of the adhesiveness, which causes the thermoplastic resin itself to swell due to an electrolytic solution that is a highly polar solvent, resulting in a problem that degradation in electrolyte-resistance adhesiveness leads to peeling due to long exposure to the electrolytic solution. If the denaturation amount is small, an adhesion force is hardly improved.

On the other hand, if a certain functional group is added to a joint surface of a molded body before joining using a reactive hot melt adhesive as described in Patent Document 2, properties such as conductivity of the surface may change due to the introduction of the functional group when the molded body is, for example, a current collecting foil. For example, it is conceivable that the functional group is selectively introduced only into a part to which the reactive hot melt adhesive is applied; however, this requires steps such as masking for preventing the fluorine gas-containing gas from contacting a portion in which introduction of the functional group is not desired and peeling the mask after the treatment, and the method has room for improvement in terms of simplification of steps. Additionally, Patent Document 2 is directed to the case of the molded body made of a polyolefin resin and does not provide an improvement in adhesion of the imide group-containing resin compounded with a filler described above.

It is therefore a problem of the present invention to provide a thermoplastic adhesive sheet excellent in initial adhesiveness to an imide group-containing resin compounded with a filler and also excellent in electrolyte-resistance adhesiveness.

Other problems of the present invention will become apparent from the following description.

### MEANS FOR SOLVING PROBLEM

The problem is solved by the following aspects of the invention.
1. The use of a thermoplastic adhesive sheet having a functional group introduced into a surface by surface modification of a polyolefin resin, for bonding to an imide group-containing resin compounded with a filler, wherein the functional group least comprises a maleimide group.
2. The use of the thermoplastic adhesive sheet according to 1 wherein a proportion of a modification thickness to an entire thickness of the thermoplastic adhesive sheet is within a range of 0.5 % to 12 %.
3. The use of the thermoplastic adhesive sheet according to 1 or 2 wherein a modification thickness of the surface modification is within a range of 0.5 µm to 12 µm.
4. The use of the thermoplastic adhesive sheet according to any one of 1 to 3, wherein the functional group is introduced into the surface by applying a plasma to the surface of the polyolefin resin.
5. The use of the thermoplastic adhesive sheet according to any one of 1 to 3, wherein the functional group is introduced into the surface by applying a primer to the polyolefin resin.
6. A laminate comprising a thermoplastic adhesive sheet having a functional group introduced into a surface by surface modification of a polyolefin resin, wherein the functional group at least comprises a maleimide group, and a sheet of an imide group-containing resin compounded with a filler, the sheet being bonded to the thermoplastic adhesive sheet.

### EFFECT OF THE INVENTION

The present invention can provide the thermoplastic adhesive sheet excellent in initial adhesiveness to the imide group-containing resin compounded with a filler and also excellent in electrolyte-resistance adhesiveness.

### BRIEF DESCRIPTION OF DRAWINGS

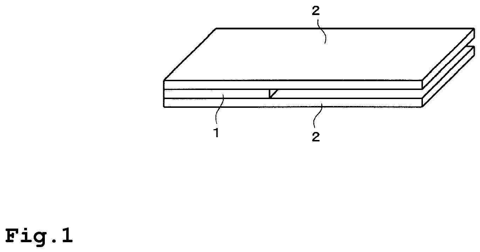

Fig. 1 is a diagram for explaining a test method of initial adhesiveness.

### DESCRIPTION OF THE PREFERRED EMBODIMENTS

A thermoplastic adhesive sheet for use in the present invention has a maleimide functional group introduced into a surface by surface modification and is bonded to an imide group-containing resin compounded with a filler (hereinafter sometimes referred to as a filler-compounded imide group-containing resin).

This thermoplastic adhesive sheet can improve the initial adhesiveness to the filler-compounded imide group-containing resin.

Since the surface modification is used, the functional group can selectively be increased in the surface even if the functional group is increased for ensuring a sufficient adhesion force. Therefore, a modification thickness of the surface modification can be made thinner. As a result, even when being exposed to an electrolytic solution that is a highly polar solvent, the thermoplastic adhesive sheet hardly swells as a whole and the retention of adhesiveness is facilitated. Therefore, an effect is provided that improves a property of facilitating the retention of adhesiveness even after long exposure to the electrolytic solution (this property is sometimes referred to as electrolyte-resistance adhesiveness).

As a result, since a degree of freedom is increased in setting of thickness of the thermoplastic adhesive sheet, a desired thickness is easily applied to ensure a desired interval between members bonded via the thermoplastic adhesive sheet. Therefore, particularly when a plurality of single cell layers including current collecting foils made of the filler-compounded imide group-containing resin is laminated in a lithium ion secondary battery, the sheet can preferably be used for interlayer adhesion. In this case, the thermoplastic adhesive sheet is excellent in initial adhesiveness and electrolyte-resistance adhesiveness to the filler-compounded imide group-containing resin making up the current collecting foils and therefore contributes to the reliability of the battery.

In this description, the "initial adhesiveness" refers to the adhesiveness provided immediately after bonding and may be considered as the adhesiveness before exposure to an electrolytic solution in comparison with the "electrolyte-resistance adhesiveness" described above.

The functional group introduced into the surface of the thermoplastic adhesive sheet by surface modification is capable of imparting to the thermoplastic adhesive sheet the adhesiveness to the filler-compounded imide group-containing resin.

The thermoplastic adhesive sheet is formed by surface modification of a thermoplastic resin and, although the thermoplastic resin used is a polyolefin resin.

The polyolefin constituting the polyolefin resin is not particularly limited and may preferably be exemplified by, for example, polyethylene, polypropylene, polybutene, polypentene, polyhexene, polyoctene, polyisobutylene, ethylene-propylene copolymer, and ethylene-butene copolymer, and the like.

For a method of surface modification, a known method may be used without particular limitation as long as the functional group may be introduced into the surface of the thermoplastic resin, and the method may preferably be exemplified by a method using plasma and a method using primer, for example.

If plasma is used, the surface modification may be performed by applying plasma to the surface of the thermoplastic resin that is an object of the surface modification to denature the resin in the surface and generate the functional group.

If primer is used, the surface modification may be performed by, for example, applying primer comprising a resin containing the functional group and a solvent through spraying etc. to the surface of the thermoplastic resin that is an object of the surface modification and by volatilizing the solvent. The resin containing the functional group may preferably be a resin such as polyolefin in which the functional group is introduced by denaturation, for example. The polyolefin may preferably be exemplified by polyethylene, polypropylene, polybutene, polypentene, polyhexene, polyoctene, polyisobutylene, ethylene-propylene copolymer, ethylene-butene copolymer, and the like.

A modification thickness of the surface modification is preferably within a range of 0.5 µm to 12 µm. The modification thickness refers to a thickness of a region in which the functional group is introduced in the surface of the thermoplastic adhesive sheet. For example, if the surface modification is performed by using primer, a thickness of a primer layer after drying (after vaporization of the solvent) corresponds to the modification thickness.

The proportion of the modification thickness to the entire thickness of the thermoplastic adhesive sheet is preferably within a range of 0.5 % to 12 %. This leads to further improvement in the electrolyte-resistance adhesiveness.

Preferably, the thermoplastic adhesive sheet has the both sides subjected to a surface modification treatment and has the functional group introduced by the surface modification in the both surfaces. As a result, the thermoplastic adhesive sheet may have favorable double-sided adhesive characteristics.

If the thermoplastic adhesive sheet has one surface for an adherend that is the filler-compounded imide group-containing resin and the other surface for an adherend that is other than that (e.g., a resin such as polyolefin), it is also preferable that the functional group be selectively introduced by the surface modification into the one surface for an adherend that is the filler-compounded imide group-containing resin.

The thermoplastic adhesive sheet may be disposed and preferably used between a member made of the filler-compounded imide group-containing resin and another member so as to bond these members. Therefore, in a certain form, the thermoplastic adhesive sheet may be an adhesive sheet bonding a member made of the filler-compounded imide group-containing resin to another member. The other member may be a member made of the filler-compounded imide group-containing resin or others.

When the thermoplastic adhesive sheet of the present invention is used, the filler-compounded imide group-containing resin may preferably be applied as an adherend thereof as described above.

A filler used with the imide group-containing resin is not particularly limited and may preferably be exemplified by, for example, a conductive filler, and specific examples include conductive carbon, tin (Sn), lithium titanate (Li₄Ti₅O₁₂), and the like.

The imide group-containing resin is not particularly limited as long as the resin contains an imide group, and examples thereof may include, for example, polyimide (PI), polyamidimide (PAI), and polyetherimide (PEI), and the like.

At the time of bonding between a modified surface of the thermoplastic adhesive sheet and the filler-compounded imide group-containing resin, the modified surface and the resin are preferably heated and/or pressurized in a laminated state and, specifically, hot-press bonding etc. are preferably used.

### Examples

Although examples of the present invention will hereinafter be described, the present invention is not limited by the examples.

### (Example 1)

A thermoplastic adhesive sheet subjected to surface modification was fabricated by spraying and applying onto both surfaces of a polyolefin resin (ethylene-propylene copolymer) sheet an application liquid comprising a solvent and a polyolefin resin (ethylene-propylene copolymer) containing a maleimide group as a functional group followed by drying at 80 °C for 10 minutes to volatilize the solvent to form a primer layer. The thickness of the primer layer (i.e., the modification thickness) was 3 µm. The thickness of the whole thermoplastic adhesive sheet comprising the primer layer was about 100 µm.

### <Evaluation Method>

### 1. Initial Adhesiveness

As shown in Fig. 1, two filler-compounded imide group-containing resin sheets 2 were prepared and the sheets 2, 2 were bonded by hot-press bonding via a thermoplastic adhesive sheet 1 fabricated as described above to fabricate a test piece . The filler-compounded imide group-containing resin sheet 2 is made of an imide group-containing resin (polyimide) containing conducting carbon as a filler. The filler-compounded imide group-containing resin sheets 2 have dimensions of 2 cm×5 cm, and the thermoplastic adhesive sheet 1 has dimension of 2 cm×2 cm and thickness of about 100 µm.

For this test piece, a T-peel test was conducted in conformity to JIS K6854-3 (1999) to evaluate the initial adhesiveness based on the measured adhesion strength in accordance with the following evaluation criteria.

### (Evaluation Criteria)

A: Adhesion strength is 0.2 N/mm or more.
B: Adhesion strength is 0.1 N/mm to less than 0.2 N/mm.
C: Adhesion strength is less than 0.1N/mm.

### 2. Electrolyte-Resistance Adhesiveness

The test piece fabricated in "1. Initial Adhesiveness" was immersed in an electrolytic solution (a mixed solution of equal volumes of propylene carbonate and ethylene carbonate with lithium salt LiPF₆ dissolved at concentration of 1 mol/L) under 45 °C environment and, after the test piece was taken out and washed after 2000 hours, the same T-peel test as "1.initial adhesiveness" was conducted to measure the adhesion strength. Additionally, a state of peeling of the thermoplastic adhesive sheet was visually observed. The results were evaluated in accordance with the following evaluation criteria.

### (Evaluation Criteria)

A: Adhesion strength of 0.2 N/mm or more is recognized and no peeling is observed in a periphery.
B: Although adhesion strength of 0.2 N/mm or more is recognized, the peeling is recognized in a periphery.
C: Adhesion strength of 0.2 N/mm or more is not recognized.

### (Comparison Example 1)

In Example 1, polypropylene without surface modification was used for a thermoplastic adhesive sheet and evaluated by the same evaluation method as Example 1. This thermoplastic adhesive sheet is entirely made of the polypropylene.

### (Comparison Example 2)

In Example 1, thermoplastic polyester without surface modification was used for a thermoplastic adhesive sheet. Evaluation was made by the same evaluation method as Example 1. This thermoplastic adhesive sheet is entirely made of the thermoplastic polyester.

### (Comparison Example 3)

In Example 1, reactive polyethylene without surface modification was used for a thermoplastic adhesive sheet and evaluated by the same evaluation method as Example 1. The reactive polyethylene used was polyethylene having a functional group (carboxyl group) introduced therein. This thermoplastic adhesive sheet is entirely made of the reactive polyethylene.

**[Table 1]**

| | thermoplastic adhesive sheet | initial adhesiveness | electrolyte-resist ance adhesiveness |
|---|---|---|---|
| Example 1 | surface-modified ethylene-propylene copolymer | A | A |
| Comparison Example 1 | polypropylene | C | - |
| Comparison Example 2 | thermoplastic polyester | B | C |
| Comparison Example 3 | reactive polyethylene | A | C |

### <Evaluation>

Example 1 using the thermoplastic adhesive sheet of the present invention shows that the sheet is excellent in the initial adhesiveness and the electrolyte-resistance adhesiveness to the filler-compounded imide group-containing resin.

On the other hand, Comparison Example 1 using polypropylene without surface modification shows that the initial adhesiveness is low.

Although a certain level of the initial adhesiveness is acquired in Comparison Example 2 using thermoplastic polyester, the sheet is inferior in the electrolyte-resistance adhesiveness. It is presumed that, although a functional group inherently contained in polyester produces a certain level of the initial adhesiveness, the electrolyte-resistance adhesiveness is degraded because of swelling due to the electrolytic solution since the functional group is distributed in the entire adhesive sheet.

Although the initial adhesiveness is not a problem in Comparison Example 3 using the reactive polyethylene subjected to a denaturation treatment for introducing the functional group, the sheet is inferior in the electrolyte-resistance adhesiveness. It is presumed that since the entire adhesive sheet is made of the reactive polyethylene and the functional group is therefore distributed in the entire adhesive sheet, the electrolyte-resistance adhesiveness is degraded because of swelling due to the electrolytic solution.

## Claims

1. Use of a thermoplastic adhesive sheet having a functional group introduced into a surface by surface modification of a polyolefin resin, for bonding to an imide group-containing resin compounded with a filler, wherein the functional group at least comprises a maleimide group.

2. The use of the thermoplastic adhesive sheet according to claim 1, wherein a proportion of a modification thickness to an entire thickness of the thermoplastic adhesive sheet is within a range of 0.5 % to 12 %.

3. The use of the thermoplastic adhesive sheet according to claim 1 or 2, wherein a modification thickness of the surface modification of the thermoplastic adhesive sheet is within a range of 0.5 µm to 12 µm.

4. The use of the thermoplastic adhesive sheet according to any one of claims 1 to 3, wherein the functional group is introduced into the surface by applying a plasma to the surface of the polyolefin resin.

5. The use of the thermoplastic adhesive sheet according to any one of claims 1 to 3, wherein the functional group is introduced into the surface by applying a primer to the polyolefin resin.

6. A laminate comprising
a thermoplastic adhesive sheet (1) having a functional group introduced into a surface by surface modification of a polyolefin resin, wherein the functional group at least comprises a maleimide group, and
a sheet (2) of an imide group-containing resin compounded with a filler, the sheet (2) being bonded to the thermoplastic adhesive sheet (1).

## Patentansprüche

1. Verwendung einer thermoplastischen Haftfolie, die eine funktionelle Gruppe aufweist, die durch Oberflächenmodifikation eines Polyolefin-Harzes in eine Oberfläche eingeführt ist, zur Bindung an ein Imid-Gruppe enthaltendes Harz, das mit einem Füllstoff vermischt ist, wobei die funktionelle Gruppe mindestens eine Maleimid-Gruppe umfasst.

2. Verwendung der thermoplastischen Haftfolie nach Anspruch 1, wobei ein Anteil einer Modifikations-Dicke zu einer gesamten Dicke der thermoplastischen Haftfolie in einem Bereich von 0.5 % bis 12 % liegt.

3. Verwendung der thermoplastischen Haftfolie nach Anspruch 1 oder 2, wobei eine Modifikations-Dicke der Oberflächenmodifikation der thermoplastischen Haftfolie innerhalb eines Bereiches von 0.5 µm bis 12 µm liegt.

4. Verwendung der thermoplastischen Haftfolie nach einem der Ansprüche 1 bis 3, wobei die funktionelle Gruppe durch Anwendung eines Plasmas auf die Oberfläche des Polyolefinharzes in die Oberfläche eingeführt ist.

5. Verwendung einer thermoplastischen Haftfolie nach einem der Ansprüche 1 bis 3, wobei die funktionelle Gruppe durch Anwendung eines Primers auf das Polyolefinharz in die Oberfläche eingeführt ist.

6. Laminat, umfassend,
eine thermoplastische Haftfolie (1), die eine funktionelle Gruppe aufweist, die durch Oberflächenmodifikation eines Polyolefin-Harzes in eine Oberfläche eingeführt ist, wobei die funktionelle Gruppe mindestens eine Maleimid-Gruppe enthält, und
eine Folie (2) eines Imid-Gruppen enthaltenden Harzes, das mit einem Füllstoff gemischt ist, wobei die Folie (2) an die thermoplastische Haftfolie gebunden ist.

## Revendications

1. Utilisation d'une feuille adhésive thermoplastique ayant un groupe fonctionnel introduit dans une surface par modification de surface d'une résine polyoléfine, pour se lier à une résine contenant un groupe imide composée d'une charge, dans laquelle le groupe fonctionnel comprend au moins un groupe maléimide.

2. Utilisation d'une feuille adhésive thermoplastique selon la revendication 1, dans laquelle une proportion d'une épaisseur de modification par rapport à une épaisseur totale de la feuille adhésive thermoplastique est à dans une plage de 0,5 % à 12 %.

3. Utilisation d'une feuille adhésive thermoplastique selon la revendication 1 ou 2, dans laquelle une épaisseur de modification de la modification de surface de la feuille adhésive thermoplastique est dans une plage de 0,5 µm à 12 µm.

4. Utilisation d'une feuille adhésive thermoplastique selon l'une quelconque des revendications 1 à 3, dans laquelle le groupe fonctionnel est introduit dans la surface par l'application d'un plasma à la surface de la résine polyoléfine.

5. Utilisation d'une feuille adhésive thermoplastique selon l'une quelconque des revendications 1 à 3, dans laquelle le groupe fonctionnel est introduit dans la surface par l'application d'un apprêt à la résine polyoléfine.

6. Stratifié comprenant
une feuille adhésive thermoplastique (1) ayant un groupe fonctionnel introduit dans une surface par modification de surface d'une résine polyoléfine, dans lequel le groupe fonctionnel comprend au moins un groupe maléimide, et
une feuille (2) d'une résine contenant un groupe imide composée d'une charge, la feuille (2) étant liée à la feuille adhésive thermoplastique (1).
